# FASCICULE DE BREVET EUROPEEN

(11) **EP 3 657 115 B1**
(45) Date de publication et mention de la délivrance du brevet: **12.10.2022**
(21) Numéro de dépôt: 19210135.0
(22) Date de dépôt: 19.11.2019
(51) Int. Cl.: F28F 3/12, F28F 7/02, F28D 1/047, F28F 13/00, F28F 21/08, B01J 19/00, B29C 33/02, B29C 33/38, B22C 9/06, B22C 9/00, B22D 19/00, B22D 19/02, B22F 5/00, B22D 23/06, B22F 3/26, B22F 5/10, B22F 7/00, B22F 10/20, B33Y 10/00, B33Y 40/20, B33Y 80/00, F28D 21/00

(54) **PROCÉDÉ DE REALISATION D'UN MODULE D'ECHANGEUR DE CHALEUR A AU MOINS UN CIRCUIT DE CIRCULATION DE FLUIDE**
HERSTELLUNGSVERFAHREN EINES WÄRMETAUSCHERMODULS MIT MINDESTENS EINEM FLUID-UMWÄLZKREISLAUF
METHOD FOR MANUFACTURING A HEAT EXCHANGER MODULE WITH AT LEAST ONE FLUID CIRCULATION CIRCUIT

(30) Priorité: 23.11.2018 FR 1871737
(43) Date de publication de la demande: 27.05.2020
(73) Titulaire: Commissariat à l'Energie Atomique et aux Energies Alternatives, 75015 Paris (FR)
(72) Inventeur: CHOMETTE, Sébastien, 38054 Grenoble Cedex 9 (FR); MONTEREMAND, Mathieu, 38054 Grenoble Cedex 9 (FR); VIDOTTO, Fabien, 38054 Grenoble Cedex 9 (FR); BAFFIE, Thierry, 38054 Grenoble Cedex 9 (FR)
(74) Mandataire: Nony

(56) Documents cités:
- EP-A1- 3 296 412
- WO-A1-99/39889
- WO-A1-2013/163398
- DE-C- 17 425
- GB-A- 2 419 463
- US-A- 4 285 385
- US-A- 6 112 804
- US-A1- 2008 003 323
- US-A1- 2016 193 653
- US-A1- 2017 173 667

## Description

### Domaine technique

La présente invention concerne les échangeurs de chaleur à au moins un circuit de fluide comportant au moins un conduit.

L'invention a trait plus particulièrement à un nouveau procédé de fabrication de tels échangeurs avec au moins deux matériaux ayant des propriétés mécaniques et/ou thermiques différentes.

Les échangeurs de chaleur connus comprennent soit un soit au moins deux circuits à canaux de circulation interne de fluide. Dans les échangeurs à un seul circuit, les échanges thermiques se réalisent entre le circuit et un fluide environnant dans lequel il baigne ou un élément auquel il faut apporter ou extraire de la chaleur comme par exemple dans les moules. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins un circuit de fluide », il faut comprendre dans le cadre de l'invention, aussi bien un échangeur de chaleur à fonction uniquement d'échanges thermiques, qu'un moule ou qu'un échangeur-réacteur.

### Technique antérieure

La plupart des échangeurs de chaleur à au moins un circuit de fluide est fabriquée à partir d'un matériau unique.

Les échangeurs à plaques sont obtenus par empilement de plaques comportant des canaux et assemblées entre elles. Les canaux sont réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement, appelé gravage chimique ou électrochimique. L'assemblage des plaques peut être obtenu par des moyens mécaniques, tels que des tirants maintenant l'empilement serré entre deux plaques épaisses et rigides disposées aux extrémités. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées.

L'assemblage peut enfin être obtenu par soudage par diffusion (soudage-diffusion).

La fabrication d'échangeurs peut aussi mettre en œuvre des moules réalisés par usinage dans la masse d'un seul matériau. L'usinage est réalisé ici aussi par des moyens mécaniques, par exemple par forage ou par électroérosion (technique d'enfonçage).

Lorsqu'une tenue mécanique importante est nécessaire, notamment de par la pression de fluide élevée dans l'un des circuits de l'échangeur ou en cas de sollicitation mécanique importante, le choix du matériau doit être adapté en choisissant un matériau capable de supporter de telles contraintes mécaniques.

Or, le choix d'un matériau sur des critères mécaniques ne doit pas se faire au détriment de ses propriétés thermiques.

Afin d'optimiser les deux critères de tenue mécaniques et de performances thermiques pour la fabrication d'un échangeur à au moins un circuit de fluide, des solutions ont déjà été proposées.

Une première approche est l'utilisation d'alliages qui ont des propriétés optimisées par rapport à un seul métal. Par exemple, la demande de brevet JPH04218630A décrit l'utilisation d'un alliage de cuivre avec une résistance mécanique et conductivité thermique optimisées pour la fabrication d'un moule à plastique.

Une deuxième approche est l'utilisation d'au moins deux matériaux différents, un premier dit de « structure » pour ses propriétés mécanique et un deuxième pour ses propriétés thermiques. La demande JP2002248597A propose de souder une couche en cuivre ou alliage de cuivre sur une base d'acier. Afin d'éviter la fusion du métal de base lors du soudage de la deuxième couche, il est proposé de le refroidir.

La demande de brevet EP 0 774 525 A1 propose l'application d'un revêtement de cermet sur des alliages à base de cuivre qui servent de moule. Or, l'application d'un tel revêtement génère des résistances thermiques de contact qui limitent le gain en performance thermique obtenu par l'utilisation des alliages à base de cuivre.

La demande du brevet EP 3 181 266 A1 décrit un procédé de fabrication de composant notamment pour turbine. Une matrice de structure tridimensionnelle et un tube servant à définir un circuit de fluide sont agencés dans un moule fabriqué au moyen d'un modèle de moulage. Une matière fondue est ensuite introduite dans les cavités du moule. Après refroidissement, le tube est pris en masse par la matière fondue et une partie de la matrice de structure est absorbée par la matière fondue. Cependant, les techniques de fabrication permettant d'assembler deux matériaux métalliques différents de manière intime sont peu nombreuses.

Le brasage est une des méthodes d'assemblage entre deux matériaux métalliques. Cette méthode est limitée à des assemblages de géométrie simple. Elle nécessite par ailleurs un métal d'apport pour effectuer le soudage. Or, ces caractéristiques inhérentes à cette méthode peuvent avoir des incidences sur les possibilités d'utilisation des assemblages obtenus. En effet, il faut vérifier si la résistance thermique des jonctions ainsi que les propriétés mécaniques de celles-ci doivent être compatibles avec la température d'utilisation.

Le soudage-diffusion est une technique qui permet de lier des matériaux entre eux. Cette méthode consiste à obtenir un assemblage à l'état solide en appliquant une force à chaud sur les pièces à assembler pendant un temps donné [1]. La force appliquée a une fonction double: elle permet l'accostage, c'est-à-dire la mise en contact des surfaces à souder, et elle facilite l'élimination par fluage-diffusion de la porosité résiduelle dans les joints (interfaces).

La force appliquée pendant l'assemblage par soudage-diffusion peut être mise en œuvre par compression uni-axiale à chaud. Ce procédé consiste à appliquer simultanément une température élevée et un chargement essentiellement perpendiculaire au sommet de l'empilement des pièces à assembler pendant un temps suffisant pour assurer le soudage des pièces entre-elles. Le chargement est assuré par exemple à l'aide d'une presse équipée d'un four ou simplement à l'aide de masses disposées au sommet de l'empilement des pièces à assembler. Cette opération est généralement faite sous vide pour ne pas piéger du gaz dans les interfaces. Le soudage-diffusion uniaxial est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle.

Même si la Compression Isostatique à Chaud (CIC) permet un assemblage intime de jonctions ayant des géométries complexes, une certaine difficulté peut venir de la fabrication des différents éléments à assembler. L'usinage est réalisé par des moyens mécaniques, par exemple par fraisage, par électroérosion ou par voie chimique. L'usinage chimique est usuellement appelé gravage chimique ou électrochimique.

La demande WO 1999067047 A1 décrit un procédé d'assemblage d'un matériau en acier inoxydable martensitentique avec un deuxième matériau comprenant du cuivre par soudage diffusion.

Ces techniques, bien que précises dimensionnellement parlant et pouvant être appliquées pour des pièces de taille importante, ne permettent pas une grande liberté en termes de géométrie en trois dimensions. En effet, afin de garantir une soudure efficace, les différentes pièces devant être assemblées entre elles doivent avoir le moins de jeux possibles.

Dans certains cas, il est possible de remplacer l'un des matériaux massifs par de la poudre métallique qui sera alors densifiée lors de la mise en œuvre de la Compaction Isostatique à Chaud (CIC). Néanmoins, la morphologie des zones dans lesquelles le matériau sous forme de poudre sera situé doit permettre son introduction. Les degrés de liberté sur ces zones en termes de taille et de morphologie sont plus importants que pour l'assemblage de deux matériaux massifs, mais restent limités tout de même. De plus, le matériau sous forme de poudre est plus onéreux qu'un matériau massif de même composition du fait de l'ensemble des procédés de fabrication de la poudre (taille, morphologie et chimie de la poudre particulière). Par ailleurs, le changement de volume des zones contenant la poudre lors de la mise en œuvre du soudage-diffusion CIC doit être anticipé, un remplissage même optimisé permettant rarement de dépasser deux tiers du volume des zones vides par la poudre. D'autres méthodes qui ont connu un essor important ces dernières années concernent la fabrication additive utilisant des métaux. Cette méthode permet d'obtenir des formes de plus en plus complexes. Par exemple, la demande WO 2015/112885 A1 décrit un procédé de fabrication d'un moule par une telle méthode. Cependant, les alliages présentant de très bonnes propriétés thermiques sont souvent ceux qui sont le moins facile à mettre en œuvre avec cette technique de fabrication additive.

Enfin, la fonderie conventionnelle permet également d'obtenir des géométries de pièces très complexes pour des matériaux de conductivité thermique élevée (alliages d'aluminium ou de cuivre) mais dans la majorité des cas, cette méthode est limitée à une utilisation d'un seul matériau. De plus, les pièces fabriquées comportent des défauts inhérents à cette méthode de fabrication comme par exemple l'apparition de porosités par les gaz solubles, les défauts formés pendant le retrait de solidification etc. Un post traitement par exemple par soudage-diffusion CIC est nécessaire afin de faire disparaître ces différents défauts.

Il existe donc un besoin d'améliorer encore les procédés de réalisation d'échangeurs de chaleur à au moins un circuit de fluide, à partir d'au moins deux matériaux différents, notamment afin de pallier les inconvénients des méthodes précitées.

Le but de l'invention est de répondre au moins partiellement à ce besoin.

### Exposé de l'invention

Pour ce faire, l'invention a pour objet un procédé de réalisation d'un module d'échangeur de chaleur à au moins un circuit de fluide comportant au moins un conduit, comportant les étapes suivantes :
a) réalisation d'une partie ouverte d'une enveloppe métallique ;
b) réalisation d'un ou plusieurs tubes métalliques d'au moins un circuit de fluide ;
c) réalisation d'une structure tridimensionnelle métallique, imprégnable sur au moins une partie par au moins un métal ou alliage métallique à l'état fondu;
d) assemblage entre la partie ouverte de l'enveloppe, le ou les tubes et la structure tridimensionnelle;
e) introduction d'un ou plusieurs éléments en au moins un métal ou alliage métallique fusible dans la partie ouverte de l'enveloppe, le(s) métal(ux) ou alliage(s) métallique(s) fusible(s) ayant une température de fusion inférieure à celles des métaux de l'enveloppe, du ou des tubes et de la structure tridimensionnelle;
f) fermeture de manière étanche de l'enveloppe métallique, de sorte à former la structure extérieure définitive du module d'échangeur de chaleur ;
g) chauffage de l'enveloppe étanche, jusqu'à la fusion du ou des éléments en au moins un métal ou alliage métallique fusible avec imprégnation par gravité de la structure tridimensionnelle et prise en masse du ou des tubes ;
h) refroidissement de l'ensemble, de sorte à obtenir l'assemblage définitif du module d'échangeur de chaleur.

Ainsi, l'invention est essentiellement un procédé de réalisation d'un module d'échangeur de chaleur à au moins un fluide qui combine un ou plusieurs matériaux aux propriétés différenciées, les tubes et le(s) métal(ux) ou alliage(s) métallique(s) fusible(s) ayant de bonnes caractéristiques thermiques tandis que la structure tridimensionnelle adaptée pour renforcer mécaniquement l'enveloppe et cette dernière présente de bonnes caractéristiques mécaniques.

L'imprégnation par fonderie de la structure tridimensionnelle avec un métal à l'état fondu permet donc d'obtenir *in fine* un module d'échangeur de chaleur avec des propriétés thermiques et mécaniques optimales.

La présente invention présente au moins les avantages suivants par rapport aux procédés existants de fabrication de module d'échangeur de chaleur au moins à un circuit de fluide :
- elle permet de réduire de manière conséquente la complexité de réalisation d'un module d'échangeur de chaleur à au moins un circuit de fluide constitué d'au moins deux matériaux différents. En effet, les étapes de mise en forme du métal présentant de bonnes propriétés thermiques sont remplacées par une étape de fusion d'un métal et imprégnation d'une structure tridimensionnelle avec prise en masse des tubes ;
- la structure tridimensionnelle peut avoir des formes très complexes permettant une résistance mécanique élevée tout en gardant un taux de remplissage élevé par un matériau présentant de bonnes propriétés thermiques. En effet, la structure tridimensionnelle étant imprégnable au moins sur une partie, elle peut être associée aisément à un matériau fondu présentant de bonnes propriétés thermiques;
- le fait d'avoir un remplissage de l'intérieur de l'enveloppe par un métal fondu est particulièrement avantageux si un traitement par CIC est mis en œuvre après l'assemblage du module d'échangeur de chaleur, car cela permet d'améliorer entre autres les comportements thermique et mécanique de l'assemblage.

Par « fusion » on entend ici le sens usuel du terme, à savoir le passage d'un matériau d'un état solide à un état liquide.

Par « métal ou alliage métallique fusible » on entend ici le sens usuel du terme, à savoir un métal ou alliage de métal capable de fondre lorsqu'il est chauffé à et au-delà de son point de fusion. Dans le cadre de l'invention on peut avoir un mélange de plusieurs métaux ou alliages fusibles.

Par « imprégnation » on entend ici le sens usuel du terme, à savoir l'occupation par un liquide d'un volume qui lui est disponible lorsqu'il s'écoule à l'intérieur de ce dernier.

Selon une variante de réalisation, le(s) élément(s) en au moins un métal ou alliage métallique fusible introduit(s) dans l'enveloppe à l'étape e) est(sont) constitué(s) d'une ou plusieurs pièces de récupération et/ou d'une poudre.

Dans une variante de réalisation, après l'étape h), on réalise une étape i) d'usinage pour enlever une partie de l'enveloppe métallique non imprégnée par le au moins un métal ou alliage métallique à l'état fondu.

Avantageusement, on réalise les étapes a), b), c) et d) simultanément par fabrication additive, de préférence par fusion sélective par laser (SLM).

Selon une variante avantageuse on réalise la fabrication additive avec une poudre en acier inoxydable, de préférence de l'acier inoxydable 1.4404.

Le cuivre est un matériau avec de bonnes propriétés thermiques, ainsi le métal fusible est du cuivre, de préférence du cuivre Cu-C1.

Dans une variante de réalisation préférentielle, la structure tridimensionnelle est une structure alvéolaire.

Selon une variante avantageuse, après l'étape h) et le cas échéant après l'étape i), on réalise une étape j) au cours de laquelle on applique un cycle de compression isostatique à chaud (CIC) à l'assemblage définitif.

L'étape g) consiste en un chauffage à une température comprise entre 1090°C et 1350°C avec une montée en température d'une durée comprise entre 1h et 4h et un maintien en température d'une durée de 1h à 6h.

Afin d'obtenir les côtes et l'état de surface désirés pour le module d'échangeur de chaleur fini, de préférence, après l'étape h) et le cas échéant après l'étape j) on réalise une étape k) de reprise des surfaces extérieures de l'assemblage
L'étape j) consiste en un cycle de CIC à une température comprise entre 800°C et 1080°C, une pression comprise entre 500 et 1500 bar et avec une montée en température d'une durée comprise entre 1h et 6h et un maintien en température d'une durée de 1h à 6h.

Bien évidemment, la température de travail pour le cycle de CIC est inférieure à la température de fusion du métal fusible. Il peut être avantageux que le métal fusible soit ramolli pendant le cycle CIC afin d'éliminer rapidement les défauts qui peuvent apparaitre lors des étapes g) de fusion et h) de refroidissement. Cette étape permet aussi d'éliminer les défauts qui peuvent apparaitre lors de l'étape de fabrication additive.

Avantageusement, la température de fusion du métal ou alliage métallique a une température de fusion bien inférieure à celles du métal de l'enveloppe, du ou des tubes du circuit de fluide et de la structure tridimensionnelle. Ainsi, la température de fusion du au moins un métal ou alliage métallique fusible est inférieure d'au moins 100°C, de préférence entre 150°C et 200°C, à la température de fusion de l'enveloppe, du ou des tubes et de la structure tridimensionnelle.

L'invention a également pour objet un module d'échangeur de chaleur à au moins un circuit de fluide obtenu selon le procédé selon l'une quelconque des revendications précédentes. Selon une variante de ce mode, l'une des surfaces extérieures est destinée à servir de surface de moulage.

L'invention a enfin pour objet une utilisation d'un module d'échangeur comme ci-dessus en tant que partie de moule de plasturgie.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] présente une vue en perspective d'une partie d'un module d'échangeur de chaleur à un circuit de fluide selon la présente invention avant l'intégration d'un bloc d'alliage de cuivre à faire fondre;
[Fig 1A] est une coupe selon un plan A1 du module d'échangeur de la figure 1 ;
[Fig 1B] est une coupe selon un plan A2 du module d'échangeur de la figure 1 ;
[Fig 1C] est une vue de détail de la figure 1B ;
[Fig 2] est une vue en perspective d'une maille élémentaire de la structure tridimensionnelle alvéolaire utilisée dans l'exemple de module d'échangeur de chaleur selon la présente invention ;
[Fig 3] est une vue en perspective d'un bloc d'alliage de cuivre pour l'imprégnation de la structure de renfort alvéolaire ;
[Fig 4] est une vue en perspective partielle et par transparence d'une enveloppe de l'assemblage avant l'étape de fusion du bloc d'alliage de cuivre ;
[Fig 5] est une vue en perspective d'une plaque de fermeture de l'enveloppe de la figure 4 ;

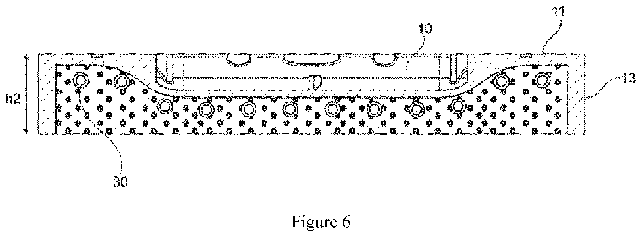

[Fig 6] est une coupe selon le plan A2 de la figure 1 d'un module d'échangeur de chaleur à un circuit de fluide obtenu selon le procédé de réalisation conforme à l'invention.

### Description détaillée

Dans l'exemple illustré selon l'invention, on fabrique un module d'échangeur de chaleur à unique circuit de refroidissement, qui constitue un demi-moule de plasturgie.

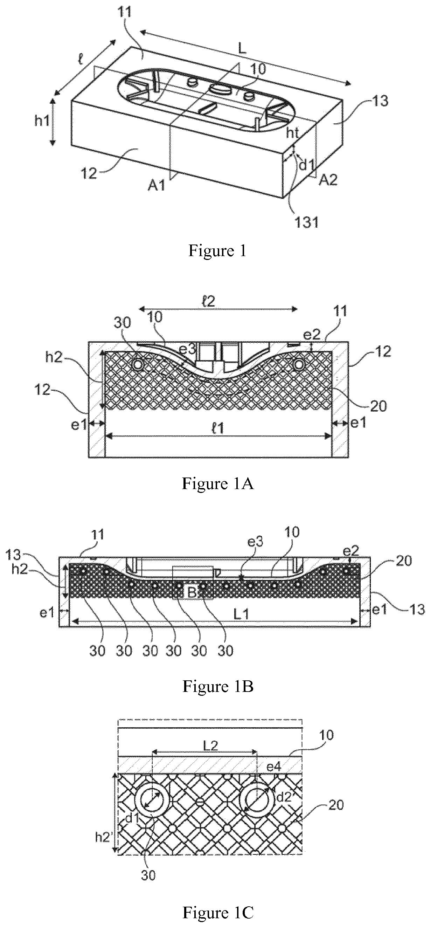

Etape a) : On réalise une structure parallélépipédique de longueur L, de largeur 1 et de hauteur h et constitue la partie ouverte de l'enveloppe creuse d'un module d'échangeur de chaleur (Figure 1).

Cette enveloppe comprend quatre parois extérieures 10, 11, 12, 13. La surface du dessus 10 est destinée à servir d'empreinte moulante.

Les parois 12 et 13 ont une épaisseur e1 (Figures 1A et 1B). Ainsi, les dimensions de l'intérieur de l'enveloppe sont une longueur L1=L-2^{∗}e1, une largeur l1=l-2^{∗}e1.

La paroi supérieure 11 a une épaisseur e2 en dehors de l'empreinte moulante 10 et une épaisseur e3 au niveau de l'empreinte moulante 10.

Etape b) : On réalise un circuit de refroidissement constitué d'un unique tube 30 avec des dimensions qui correspondent à la longueur et largeur du volume intérieur de l'enveloppe. Le tube 30 a un diamètre intérieur d1 et un diamètre extérieur d2, les retournements de ce tube sont espacés d'une longueur L2, la largeur de chaque retournement est de l2 et la distance entre le dessous de la paroi moulante 10 et la surface extérieure du tube est d'une épaisseur e4 (Figure 1C).

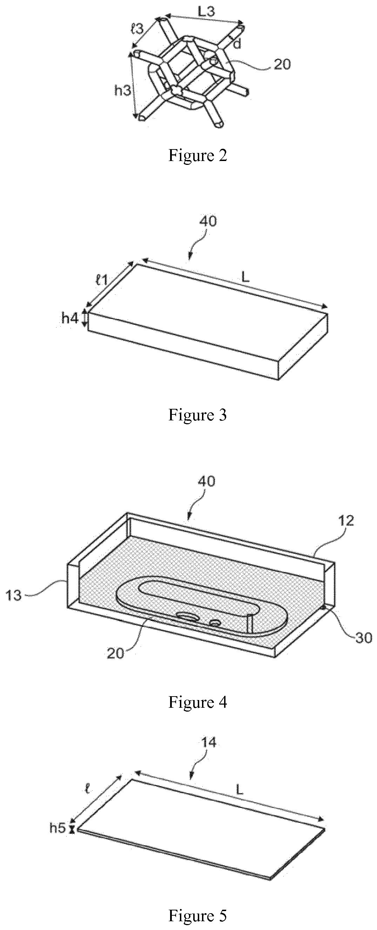

Etape c) : On réalise une structure tridimensionnelle 20 à l'intérieur de l'enveloppe qui est, dans l'exemple illustré, une structure alvéolaire. Cette structure tridimensionnelle 20 remplit la partie ouverte de l'enveloppe sur une longueur L1, une largeur l1 et une épaisseur comprise entre une valeur h2 sous la zone extérieure à la paroi moulante 10 et une valeur h2' sous le centre de la paroi moulante 10 (Figures 1A, 1B et 1C). La structure alvéolaire 20 est constituée de mailles dont une maille élémentaire est présentée en détail sur la Figure 2. Cette maille a une longueur L3, une largeur l3, une hauteur et une épaisseur de brin d3.

A titre d'exemple, la maille élémentaire de la structure alvéolaire est du type diamant de dimensions L3=13=h3=6mm avec une épaisseur de brin d3 de 0,6mm. L'épaisseur de la structure alvéolaire h2 est égale à 21mm sous la paroi moulante 10 et h2' égale à 9,2mm sous la paroi moulante 10.

Etape d) : On réalise l'assemblage des différents éléments réalisés aux étapes a) à c). Ainsi, la structure alvéolaire 30 et le tube 30 du circuit de refroidissement sont agencés dans la partie ouverte de l'enveloppe 10 à 13. Le tube 30 du circuit de refroidissement débouche sur le milieu extérieur par un trou 131 sur chacune des faces latérales 13 dont un seul est visible sur la figure 1. Ces deux trous 131 sont réalisés à une distance lt de la paroi latérale 12 et d'une hauteur ht de la paroi supérieure 11 (Figure 1).

Dans l'exemple que l'on décrit, les étapes a) à d) sont réalisées simultanément par fabrication additive. A titre d'exemple, la technique de fabrication additive est la technique de « Selected Laser Melting » (SLM) à partir d'une poudre d'acier inoxydable 1.4404.

La partie ouverte de l'enveloppe du module d'échangeur de chaleur à une longueur L=150mm, une largeur l=80mm et une hauteur h=36mm. Les parois latérales 12 et 13 ont une épaisseur e1=5mm, ainsi la surface évidée à l'intérieur de l'enveloppe hormis la zone sous la paroi moulante 10 est 140^{∗}70mm.

La paroi supérieure 11 a une épaisseur e2=3mm en dehors de l'empreinte moulante 10 et une épaisseur e3=2mm au niveau de la face moulante 10.

Le circuit de refroidissement est constitué d'un tube 30 de diamètre intérieur d1 de 2,5mm et un diamètre extérieur d2 de 4mm. Les retournements ont une largeur de 50mm et un espacement de 11,5mm (Figure 1C). La distance entre le dessous de la paroi moulante 10 et la surface extérieure du tube 30 e4 est constante, égale à 1mm. Les trous latéraux 131 sont situés à une distance lt de 15mm par rapport à la surface 12 et à une distance ht de 7mm par rapport à la surface supérieure 11.

Etape e) : On place la partie ouverte de l'enveloppe de manière à rendre son intérieur accessible depuis le haut afin d'y loger un bloc de métal fusible 40 et de le positionner sur la structure alvéolaire 20 (Figure 4). Lorsque les étapes a) à d) sont réalisées simultanément, la mise en place de la partie ouverte consiste en un retournement de cette dernière.

Le bloc de métal fusible est ici un parallélépipède rectangle de dimensions L1^{∗}l1^{∗}h4 (Figure 3).

A titre d'exemple, le métal fusible est du cuivre de type Cu-C1 et le bloc parallélépipède rectangle a une longueur L1=140mm, une largeur=70mm et une épaisseur h4=15mm. Etape f) : On ferme de manière étanche l'enveloppe avec une plaque de fermeture 14 d'épaisseur h5, de longueur L et de largeur l.

A titre d'exemple, la plaque de fermeture 14 est en acier inoxydable 1.4404 d'épaisseur h5=2mm, de longueur L=150mm et de largeur l=80mm. La fermeture de manière étanche se fait par soudure du pourtour de la plaque fermeture sur la partie ouverte de l'enveloppe par soudage TIG (Tungsten Inert Gaz).

Etape g) : L'assemblage réalisé selon les étapes précédentes est introduit dans un four pour réaliser la fusion du métal fusible du bloc 40. La matière fondue imprègne sous l'effet de la gravité la structure alvéolaire 20 et vient prendre en masse le tube 30 du circuit de refroidissement.

A titre d'exemple, la fusion est réalisée dans un four sous un gaz neutre à une température de 1150°C avec une montée en température d'une durée de 3h et un maintien d'une durée de 3h.

Etape h) : on réalise un refroidissement de l'ensemble, de sorte à obtenir l'assemblage définitif du module d'échangeur de chaleur.

Afin d'éviter des chocs thermiques par un refroidissement rapide, il est avantageux de réaliser une descente à température ambiante de manière contrôlée, par exemple dans un four.

A titre d'exemple on réalise le refroidissement de l'ensemble dans un four avec une rampe de descente contrôlée d'une durée minimum de 3h, pour le passage de 1150°C à 20°C.

Etape i) : On réalise enfin une étape d'usinage final pour enlever une partie de l'enveloppe métallique non imprégnée par le métal à l'état fondu du bloc. Par exemple, la face inférieure du module est fraisée sur une épaisseur de 17mm, afin de retirer la plaque de fermeture et le reste de matière n'ayant pas imprégné la structure alvéolaire.

Etape j) : on applique un cycle de compression isostatique à chaud (CIC) à l'assemblage définitif.

A titre d'exemple, lorsque le métal fusible est du cuivre de type Cu-Cl, le cycle de CIC est réalisé à une température de 1000°C avec une montée en température d'une durée de 3h et un maintien d'une durée de 2h.

Etape j) : On effectue un décapage au moins de la surface extérieure moulante de la paroi 10.

A titre d'exemple, un décapage chimique est réalisé pour enlever les éventuelles traces d'oxydation dues au traitement thermique. Un usinage de parachèvement de la paroi moulante est enfin réalisé pour obtenir les côtes et l'état de surface désirés.

D'autres variantes et améliorations peuvent être apportées sans pour autant sortir du cadre de l'invention comme défini par les revendications.

### Liste des documents cités

*[1]* «Fusion reactorfirst wall fabrication techniques» de G. Le Marois, E. Rigal, P. Bucci, (Fusion Engineering and Design pp 61-62 (2002) 103-110 Elsevier Science B.V);

## Revendications

1. Procédé de réalisation d'un module d'échangeur de chaleur à au moins un circuit de fluide, comportant les étapes suivantes :
a) réalisation d'une partie ouverte (11, 12, 13) d'une enveloppe métallique ;
b) réalisation d'un ou plusieurs tubes (30) métalliques d'au moins un circuit de fluide ;
c) réalisation d'une structure tridimensionnelle (20) métallique, imprégnable sur au moins une partie par au moins un métal ou alliage métallique fusible à l'état fondu ;
d) assemblage entre la partie ouverte (11, 12, 13) de l'enveloppe, le ou les tubes (30) et la structure tridimensionnelle (20) ;
e) introduction d'un ou plusieurs éléments (40) en au moins un métal ou alliage métallique fusible dans la partie ouverte de l'enveloppe, le(s) métal(ux) ou alliage(s) métallique(s) fusible(s) ayant une température de fusion inférieure à celles des métaux de l'enveloppe (11, 12, 13), du ou des tubes (30) et de la structure tridimensionnelle (20) ;
f) fermeture de manière étanche de l'enveloppe métallique, de sorte à former la structure extérieure définitive du module d'échangeur de chaleur ;
g) chauffage de l'enveloppe étanche, jusqu'à la fusion du ou des éléments en au moins un métal ou alliage métallique fusible (40) avec imprégnation par gravité de la structure tridimensionnelle et prise en masse du ou des tubes ;
h) refroidissement de l'ensemble, de sorte à obtenir l'assemblage définitif du module d'échangeur de chaleur.

2. Procédé selon la revendication 1, selon lequel le(s) élément(s) en au moins un métal ou alliage métallique fusible (40) introduit(s) dans l'enveloppe à l'étape e) est(sont) constitué(s) d'une ou plusieurs pièces de récupération et/ou d'une poudre.

3. Procédé selon l'une des revendications 1 ou 2, selon lequel après l'étape h), on réalise une étape i) d'usinage pour enlever une partie de l'enveloppe métallique non imprégnée par le au moins un métal ou alliage métallique à l'état fondu.

4. Procédé selon l'une quelconque des revendications précédentes, selon lequel on réalise les étapes a), b), c) et d) simultanément par fabrication additive, de préférence par fusion sélective par laser (SLM).

5. Procédé selon la revendication 4, selon lequel on réalise la fabrication additive avec une poudre en acier inoxydable, de préférence de l'acier inoxydable 1.4404.

6. Procédé selon l'une quelconque des revendications précédentes, selon lequel le métal fusible est du cuivre, de préférence du cuivre Cu-C1.

7. Procédé selon l'une quelconque des revendications précédentes, selon lequel la structure tridimensionnelle (20) est une structure alvéolaire.

8. Procédé selon l'une quelconque des revendications précédentes, selon lequel, après l'étape h) et le cas échéant après l'étape i), on réalise une étape j) au cours de laquelle on applique un cycle de compression isostatique à chaud (CIC) à l'assemblage définitif.

9. Procédé selon l'une quelconque des revendications précédentes, selon lequel, l'étape g) consiste en un chauffage à une température comprise entre 1090°C et 1350°C avec une montée en température d'une durée comprise entre 1h et 4h et un maintien en température d'une durée de 1h à 6h.

10. Procédé selon l'une quelconque des revendications précédentes, selon lequel, après l'étape h) et le cas échéant après l'étape j) on réalise une étape k) de décapage des surfaces extérieures de l'assemblage.

11. Procédé selon l'une quelconque des revendications précédentes, selon lequel, l'étape j) consiste en un cycle de CIC à une température comprise entre 800°C et 1080°C, une pression comprise entre 500 et 1500 bar et avec une montée en température d'une durée comprise entre 1h et 6h et un maintien en température d'une durée de 1h à 6h.

12. Procédé selon l'une quelconque des revendications précédentes, selon lequel, la température de fusion du au moins un métal ou alliage métallique fusible est inférieure d'au moins 100°C, de préférence entre 150°C et 200°C, à la température de fusion de l'enveloppe, du ou des tubes et de la structure tridimensionnelle.

13. Module d'échangeur de chaleur à au moins un circuit de fluide obtenu selon le procédé selon l'une quelconque des revendications précédentes.

14. Module d'échangeur de chaleur à au moins un circuit de fluide, selon la revendication 13, dont l'une des surfaces extérieures est destinée à servir de surface de moulage.

15. Utilisation d'un module d'échangeur selon la revendication 13 ou 14 en tant que partie de moule de plasturgie.

## Patentansprüche

1. Verfahren zur Herstellung eines Wärmetauschermoduls mit mindestens einem Fluidkreislauf, umfassend die folgenden Schritte:
a) Herstellen eines offenen Teils (11, 12, 13) eines Metallgehäuses;
b) Herstellen eines oder mehrerer Metallrohre (30) mindestens eines Fluidkreislaufs;
c) Herstellen einer dreidimensionalen Metallstruktur (20), die durch mindestens ein schmelzbares Metall oder eine schmelzbare Metalllegierung im geschmolzenen Zustand auf mindestens einen Teil imprägnierbar ist;
d) Montage zwischen dem offenen Teil (11, 12, 13) des Gehäuses, dem oder den Rohren (30) und der dreidimensionalen Struktur (20);
e) Einführen eines oder mehrerer Elemente (40) aus mindestens einem schmelzbaren Metall oder einer schmelzbaren Metalllegierung in den offenen Teil des Gehäuses, wobei das(die) schmelzbare(n) Metall(e) oder die schmelzbare(n) Metalllegierung(en) eine geringere Schmelztemperatur als die Metalle des Gehäuses (11, 12, 13), des oder der Rohre (30) und der dreidimensionalen Struktur (20) hat(haben);
f) dichtes Verschließen des Metallgehäuses, so dass die endgültige äußere Struktur des Wärmetauschermoduls gebildet wird;
g) Erhitzen des dichten Gehäuses bis zum Schmelzen des oder der Elemente aus mindestens einem schmelzbaren Metall oder einer schmelzbaren Metalllegierung (40) mit Imprägnierung durch Schwerkraft der dreidimensionalen Struktur und Erstarren des oder der Rohre in der Masse;
h) Abkühlen der Einheit, so dass die endgültige Anordnung des Wärmetauschermoduls erhalten wird.

2. Verfahren nach Anspruch 1, gemäß dem das(die) Element(e) aus mindestens einem schmelzbaren Metall oder einer schmelzbaren Metalllegierung (40), das(die) im Schritt e) in das Gehäuse eingeführt wird(werden), aus einem oder mehreren Recyclingteilen und/oder einem Pulver besteht(bestehen).

3. Verfahren nach einem der Ansprüche 1 oder 2, gemäß dem nach dem Schritt h) ein Schritt i) des Bearbeitens ausgeführt wird, um einen Teil des Metallgehäuses, der nicht mit dem mindestens einen Metall oder der mindestens einen Metalllegierung im geschmolzenen Zustand imprägniert ist, zu entfernen.

4. Verfahren nach einem der vorhergehenden Ansprüche, gemäß dem die Schritte a), b), c) und d) gleichzeitig durch additive Fertigung, bevorzugt durch selektives Laserschmelzen (SLM), ausgeführt werden.

5. Verfahren nach Anspruch 4, gemäß dem die additive Fertigung mit einem Pulver aus nichtrostendem Stahl, bevorzugt aus nichtrostendem Stahl 1.4404, ausgeführt wird.

6. Verfahren nach einem der vorhergehenden Ansprüche, gemäß dem das schmelzbare Metall Kupfer ist, bevorzugt Cu-C1-Kupfer.

7. Verfahren nach einem der vorhergehenden Ansprüche, gemäß dem die dreidimensionale Struktur (20) eine Zellstruktur ist.

8. Verfahren nach einem der vorhergehenden Ansprüche, gemäß dem nach dem Schritt h) und gegebenenfalls nach dem Schritt i) ein Schritt j) ausgeführt wird, in dessen Verlauf ein Zyklus des heißisostatischen Pressens (HIP) auf die endgültige Anordnung angewandt wird.

9. Verfahren nach einem der vorhergehenden Ansprüche, gemäß dem der Schritt g) in einem Erhitzen bis auf eine Temperatur zwischen 1090 °C und 1350 °C mit einem Temperaturanstieg mit einer Dauer zwischen 1 h und 4 h und einer Temperaturhaltung mit einer Dauer von 1 h bis 6 h besteht.

10. Verfahren nach einem der vorhergehenden Ansprüche, gemäß dem nach dem Schritt h) und gegebenenfalls nach dem Schritt j) ein Schritt k) des Beizens der Außenoberflächen der Anordnung ausgeführt wird.

11. Verfahren nach einem der vorhergehenden Ansprüche, gemäß dem der Schritt j) in einem HIP-Zyklus bei einer Temperatur zwischen 800 °C und 1080 °C, einem Druck zwischen 500 und 1500 bar und mit einem Temperaturanstieg mit einer Dauer zwischen 1 h und 6 h und einer Temperaturhaltung mit einer Dauer von 1 h bis 6 h besteht.

12. Verfahren nach einem der vorhergehenden Ansprüche, gemäß dem die Schmelztemperatur des mindestens einen schmelzbaren Metalls oder der mindestens einen schmelzbaren Metalllegierung um mindestens 100 °C, bevorzugt zwischen 150 °C und 200 °C, geringer als die Schmelztemperatur des Gehäuses, des oder der Rohre und der dreidimensionalen Struktur ist.

13. Wärmetauschermodul mit mindestens einem Fluidkreislauf, das nach dem Verfahren nach einem der vorhergehenden Ansprüche erhalten wird.

14. Wärmetauschermodul mit mindestens einem Fluidkreislauf nach Anspruch 13, bei dem eine der Außenoberflächen dazu bestimmt ist, als Formoberfläche zu dienen.

15. Verwendung eines Wärmetauschermoduls nach Anspruch 13 oder 14 als Teil einer Form zur Kunststoffverarbeitung.

## Claims

1. Method for producing a heat exchanger module having at least one fluid circuit, comprising the following steps:
a) producing an open part (11, 12, 13) of a metal shell;
b) producing one or more metal tubes (30) of at least one fluid circuit;
c) producing a metal three-dimensional structure (20) that is impregnatable in at least one part by at least one metal or metal alloy that is fusible in the molten state;
d) assembling the open part (11, 12, 13) of the shell, the tube or tubes (30) and the three-dimensional structure (20);
e) introducing one or more elements (40) made of at least one fusible metal or metal alloy into the open part of the shell, the fusible metal(s) or metal alloy(s) having a melting temperature lower than those of the metals of the shell (11, 12, 13), of the tube or tubes (30) and of the three-dimensional structure (20);
f) closing the metal shell in a sealed manner, so as to form the final exterior structure of the heat exchanger module;
g) heating the sealed shell until the element or elements (40) made of at least one fusible metal or metal alloy melt, with impregnation of the three-dimensional structure under gravity, and the tube or tubes harden;
h) cooling the whole so as to obtain the final assembly of the heat exchanger module.

2. Method according to Claim 1, wherein the element(s) (40) made of at least one fusible metal or metal alloy that has/have been introduced into the shell in step e) is/are made from one or more recovered parts and/or powder.

3. Method according to either of Claims 1 and 2, wherein, after step h), a step i) of machining so as to remove a part of the metal shell that has not been impregnated with the at least one metal or metal alloy in the molten state is carried out.

4. Method according to any one of the preceding claims, wherein steps a), b), c) and d) are carried out simultaneously by additive manufacture, preferably by selective laser melting (SLM).

5. Method according to Claim 4, wherein the additive manufacture is carried out with a powder made of stainless steel, preferably stainless steel 1.4404.

6. Method according to any one of the preceding claims, wherein the fusible metal is copper, preferably Cu-C1 copper.

7. Method according to any one of the preceding claims, wherein the three-dimensional structure (20) is a cellular structure.

8. Method according to any one of the preceding claims, wherein, after step h) and, if necessary, after step i), a step j), during which a hot isostatic pressing (HIP) cycle is applied to the final assembly, is carried out.

9. Method according to any one of the preceding claims, wherein step g) consists in heating to a temperature of between 1090°C and 1350°C with a rise in temperature for a time of between 1 h and 4 h and holding of the temperature for a time of 1 h to 6 h.

10. Method according to any one of the preceding claims, wherein, after step h) and, if necessary, after step j), a step k) of pickling the outer surfaces of the assembly is carried out.

11. Method according to any one of the preceding claims, wherein step j) consists of a HIP cycle at a temperature of between 800°C and 1080°C, a pressure of between 500 and 1500 bar with a rise in temperature for a time of between 1 h and 6 h and holding of the temperature for a time of 1 h to 6 h.

12. Method according to any one of the preceding claims, wherein the melting temperature of the at least one fusible metal or metal alloy is at least 100°C, preferably between 150°C and 200°C, lower than the melting temperature of the shell, of the tube or tubes and of the three-dimensional structure.

13. Heat exchanger module having at least one fluid circuit obtained by the method according to any one of the preceding claims.

14. Heat exchanger module having at least one fluid circuit, according to Claim 13, one of the outer surfaces of which is intended to act as a moulding surface.

15. Use of a heat exchanger module according to Claim 13 or 14 as part of a plastics-processing mould.
